(19) **Europäisches Patentamt / European Patent Office / Office européen des brevets**

(11) **EP 1 362 016 B1**

(12) **EUROPEAN PATENT SPECIFICATION**

(45) Date of publication and mention
of the grant of the patent:
**14.11.2007 Bulletin 2007/46**

(51) Int Cl.:
**C03C 25/10** (2006.01) **C08G 18/67** (2006.01)
**C08G 18/81** (2006.01)

(21) Application number: **02710560.0**

(22) Date of filing: **24.01.2002**

(86) International application number:
**PCT/NL2002/000055**

(87) International publication number:
**WO 2002/059652 (01.08.2002 Gazette 2002/31)**

(54) **CURABLE RESIN COMPOSITION FOR COATING OPTICAL FIBERS AND CURED PRODUCT THEREOF**

HÄRTBARE HARZZUSAMMENSETZUNGEN FÜR GLASFASERBESCHICHTUNGEN UND BESCHICHTETE PRODUKTE

COMPOSITION DE RESINE DURCISSABLE POUR REVETIR DES FIBRES OPTIQUES ET PRODUIT DURCI

(84) Designated Contracting States:
**AT BE CH CY DE DK ES FI FR GB GR IE IT LI LU MC NL PT SE TR**

(30) Priority: **26.01.2001 JP 2001018693**

(43) Date of publication of application:
**19.11.2003 Bulletin 2003/47**

(73) Proprietors:
• **DSM IP Assets B.V.**
**6411 TE Heerlen (NL)**
• **JSR Corporation**
**Tokyo 104-0045 (JP)**

(72) Inventors:
• **YAMAMOTO, Keiichi**
**Chuo-ku,**
**Tokyo (JP)**
• **MASE, Masahito**
**Chuo-ku,**
**Tokyo (JP)**

• **YOSHIZAWA, Junji**
**Chuo-ku,**
**Tokyo (JP)**
• **KOMIYA, Zen**
**Chuo-ku,**
**Tokyo (JP)**
• **UKACHI, Takashi**
**Chuo-ku,**
**Tokyo (JP)**

(74) Representative: **van Loon, C.J.J.**
**c/o VEREENIGDE**
**Johan de Wittlaan 7**
**2517 JR Den Haag (NL)**

(56) References cited:
**WO-A-97/16469**      **US-A- 4 690 501**
**US-A- 5 787 218**

Remarks:
The file contains technical information submitted after the application was filed and not included in this specification

**Description**

The present invention relates to a curable resin composition excelling in jelly resistance and water resistance, which is suitably used as a coating material for optical fibers, optical fiber ribbons, and the like, and to the cured product of the composition.

In the fabrication of optical fibers, resin coating is applied over glass fibers produced by spinning molten glass for protection and reinforcement. As the resin coating, a structure in which a primary flexible coating layer is formed over the surface of the glass fiber, and a secondary rigid coating layer is formed over the primary coating is known. Glass fibers provided with the primary and secondary coating layers are called optical fibers. Optical fiber ribbons produced by placing a plurality of optical fibers provided with the resin coating side by side on a plane and bundling the optical fibers using a bundling material are also known. A resin composition for forming the primary coating layer is called a primary material. A resin composition for forming the secondary coating layer is called a secondary material. A resin composition used as the bundling material for optical fiber ribbons is called a ribbon matrix material. As the resin coating method, a method of applying a curable resin composition and curing the composition using heat or light, in particular, ultraviolet rays is widely used.

When lateral pressure is applied to optical fibers or optical fiber ribbons from inside the cable, such as a case where optical fiber cables are bent, an optical transmission loss occurs. It is known in the art that optical fiber cables are filled with a jelly mixture in order to prevent optical transmission loss due to lateral pressure. This jelly mixture is called a jelly. When optical fibers coated with a conventional curable resin composition for coating optical fibers are used in the cable filled with the jelly, separation may occur at the interface between the glass fiber and the curable resin composition, thereby decreasing the strength of the optical fibers.

In order to develop a curable resin composition capable of solving these problems, it is necessary to evaluate the jelly resistance. However, conventional evaluation methods use optical fibers fabricated in practice. This makes the evaluation procedure troublesome and requires a long period of time.

Means for Solving the Problems

The present inventors have examined an evaluation method using a sample cured product without fabricating optical fibers in practice. As a result, the present inventors have found that jelly resistance can be evaluated in a short period of time with good reproducibility by respectively using a mineral oil immersion method.

As a result of further examination, the present inventors have found that a curable resin composition comprising a specific amount of a urethane (meth)acrylate, a reactive diluent, and a polymerization initiator, the cured product of which exhibits a specific range of performance in these evaluation methods, exhibits excellent jelly resistance and is useful for coating optical fibers. This finding has led to the completion of the present invention.

Specifically, the present invention provides a curable resin composition for coating optical fibers comprising: (1) 50-70 wt% of a urethane (meth)acrylate obtained by reacting (A) a polyol compound, (B) a polyisocyanate compound, and (C) a (meth)acrylate compound containing a hydroxyl group; (2) a reactive diluent copolymerizable with the component (1); and (3) a polymerization initiator; wherein the rate of dimensional change of the cured product of the composition after immersion in mineral oil at 25°C for one week is 2.5% or less.

Preferred Embodiments of the Invention

The curable resin composition for coating optical fibers of the present invention comprises a urethane (meth)acrylate as the component (1) obtained by reacting (A) a polyol compound, (B) a polyisocyanate compound, and (C) a (meth)acrylate compound containing a hydroxyl group

As specific examples of the method of preparing the urethane (meth)acrylate (1), a method of reacting the polyol (A), polyisocyanate compound (B), and hydroxyl group-containing (meth)acrylate (C) all together; a method of reacting the polyol (A) and the polyisocyanate compound (B), and reacting the resulting product with the hydroxyl group-containing (meth)acrylate (C); a method of reacting the polyisocyanate compound (B) and the hydroxyl group-containing (meth)acrylate (C), and reacting the resulting product with the polyol (A); a method of reacting the polyisocyanate compound (B) and the hydroxyl group-containing (meth)acrylate (C), reacting the resulting product with the polyol (A), and reacting the resulting product with hydroxyl group-containing (meth)acrylate (C); and the like can be given.

As examples of the polyol (A), polyether diols obtained by ring-opening polymerization of one ion-polymerizable cyclic compound such as polyethylene glycol, polypropylene glycol, polytetramethylene glycol, polyhexamethylene glycol, polyheptamethylene glycol, and polydecamethylene glycol, polyether diols obtained by ring-opening copolymerization of two or more ion-polymerizable cyclic compounds, and the like can be given. As examples of ion-polymerizable cyclic compounds, cyclic ethers such as ethylene oxide, propylene oxide, butene-1-oxide, isobutene oxide, oxetane, 3,3-dimethyloxetane, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyloxetane, vinyltetrahydrofuran, vinylcyclohexene oxide, phenyl glycidyl ether, butyl glycidyl ether, and glycidyl benzoate can be given. Polyether diols obtained by the ring-opening copolymerization of these ion-polymerizable cyclic compounds and cyclic imines such as ethyleneimine, cyclic lactonic acids such as β-propyolactone and glycolic acid lactide, or dimethylcyclopolysiloxanes may be used. As specific examples of combinations of two or more ion-polymerizable cyclic compounds, combinations of tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, a ternary copolymer of tetrahydrofuran, butene-1-oxide, and ethylene oxide, and the like can be given. The ring-opening copolymer of these ion-polymerizable cyclic compounds may be either a random copolymer or a block copolymer. Of these polyether diols, polypropylene glycol is preferable from the viewpoint of providing jelly resistance and water resistance to the cured product of the present invention. Polypropylene glycol with a polystyrene-reduced number average molecular weight determined by gel permeation chromatography (GPC) of 1000-7000 is particularly preferable.

As examples of commercially available products of these polyether diols, PTMG650, PTMG1000, PTMG2000 (manufactured by Mitsubishi Chemical Corp.), EXCENOL 1020, 2020, 3020, PREMINOL PML-4002, PML-5005 (manufactured by Asahi Glass Co., Ltd.), UNISAFE DC1100, DC1800, DCB1000 (manufactured by Nippon Oil and Fats Co., Ltd.), PPTG1000, PPTG2000, PPTG4000, PTG400, PTG650, PTG1000, PTG2000, PTG-L1000, PTG-L2000 (manufactured by Hodogaya Chemical Co., Ltd.), Z-3001-4, 2-3001-5, PBG2000 (manufactured by Daiichi Kogyo Seiyaku Co., Ltd.), ACCLAIM 2200, 2220, 3201, 3205, 4200, 4220, 8200,12000 (manufactured by Lyondell), and the like can be given.

The above polyether diols are preferable as the polyol. In addition, polyester diols, polycarbonate diols, polycaprolactone diols, and the like may be used either individually or in combination with the polyether diols. There are no specific limitations to the manner of polymerization of these structural units, which may be any of random polymerization, block polymerization, or graft polymerization.

As examples of the polyisocyanate (B) used for synthesizing the urethane (meth)acrylate (1), aromatic diisocyanates, alicyclic diisocyanates, aliphatic diisocyanates, and the like can be given. There are no specific limitations to the polyisocyanate (B) insofar as the compound can be used in the resin composition for optical fibers. Of these 2,4-tolylene diisocyanate is preferred as aromatic diisocyanate but alicyclic diisocyanates are more preferred, and isophorone diisocyanate and hydrogenated bisphenol-F diisocyanate as being still more preferred. These diisocyanate compounds may be used either individually or in combination of two or more.

As the hydroxyl group-containing (meth)acrylate (C) used for synthesizing the urethane (meth)acrylate (1), a hydroxyl group-containing (meth)acrylate in which the hydroxyl group is bonded to the primary carbon atom (hereinafter called "primary hydroxyl group-containing (meth)acrylate") and a hydroxyl group-containing (meth)acrylate in which the hydroxyl group is bonded to the secondary carbon atom (hereinafter called "secondary hydroxyl group-containing (meth) acrylate") are preferable in view of reactivity with an isocyanate group of the polyisocyanate..

As examples of the primary hydroxyl group-containing (meth)acrylate, 2-hydroxyethyl (meth)acrylate, 4-hydroxybutyl (meth)acrylate, 1,6-hexanediol mono(meth)acrylate, pentaerythritol tri(meth)acrylate, dipentaerythritol penta (meth)acrylate, neopentyl glycol mono(meth)acrylate, trimethylolpropane di(meth)acrylate, trimethylolethane di(meth) acrylate, and the like can be given.

As examples of the secondary hydroxyl group-containing (meth)acrylate, 2-hydroxypropyl (meth)acrylate, 2-hydroxybutyl (meth)acrylate, 2-hydroxy-3-phenyloxypropyl (meth)acrylate, 4-hydroxycyclohexyl (meth)acrylate, and the like can be given. Further examples include a compound obtained by the addition reaction of (meth)acrylic acid and a glycidyl group-containing compound such as alkyl glycidyl ether, allyl glycidyl ether, or glycidyl (meth)acrylate, and the like. These hydroxyl group-containing (meth)acrylate compounds may be used either individually or in combination of two or more.

The proportion of the polyol (A), polyisocyanate compound (B), and hydroxyl group-containing (meth)acrylate (C) used for synthesizing the urethane (meth)acrylate (1) is determined so that an isocyanate group included in the polyisocyanate compound and a hydroxyl group included in the hydroxyl group-containing (meth)acrylate are respectively 1.1-2 equivalents and 0.1-1 equivalent for one equivalent of a hydroxyl group included in the polyol.

In addition, diamines may be used for synthesizing the urethane (meth)acrylate (1) in combination. As examples of diamines, diamines such as ethylenediamine, tetramethylenediamine, hexamethylenediamine, p-phenylenediamine, and 4,4'-diaminodiphenylmethane, diamines containing a hetero atom, polyether diamines, and the like can be given.

Part of the hydroxyl group-containing (meth)acrylate may be replaced by a compound having a functional group which can be added to an isocyanate group. As examples of such a compound, γ-aminopropyltriethoxysilane, γ-mercaptopropyltrimethoxysilane, and the like can be given. Use of such a compound can further improves adhesion to substrates such as glass.

In the synthesis of the urethane (meth)acrylate (1), it is preferable to use a urethanization catalyst such as copper naphthenate, cobalt naphthenate, zinc naphthenate, dibutyltin dilaurate, triethylamine, 1,4-diazabicyclo[2.2.2] octane, or 2,6;7-trimethyl-1,4-diazabicyclo[2.2.2]octane in an amount of 0.01-1 wt% of the total amount of the reactants.

The reaction temperature is usually 5-90°C, and preferably 10-80°C.

The polystyrene-reduced number average molecular weight of the urethane (meth)acrylate (1) determined by GPC is usually 500-40,000, and preferably 700-30,000 in order to ensure good breaking elongation of the cured product and appropriate viscosity of the curable resin composition of the present invention.

The content of the urethane (meth)acrylate (1) in the curable resin composition of the present invention is 50-70 wt%, and particularly preferably 55-65 wt% in order to ensure excellent mechanical characteristics such as jelly resistance, water resistance, and breaking elongation of the cured product and appropriate viscosity of the curable resin composition of the present invention. If the content exceeds 70 wt%, since the cured product exhibits a Young's modulus of more than 2.0 MPa, the composition is unsuitable for a resin for coating optical fibers. Moreover, viscosity of the curable resin composition exceeds 6.0 Pa·s, thereby resulting in decreased workability. In addition, water resistance of the cured product decreases. If the content is less than 50 wt%, oil resistance and water resistance of the cured product decrease. The Young's modulus of the cured product used as a primary layer for optical fibers is 0.1-2.0 MPa, and more preferably between 0.5-1.5 MPa. Viscosity of the curable resin composition is preferably 1.0-6.0 Pa·s.

As examples of the reactive diluent (2) copolymerizable with the component (1) used in the curable resin composition of the present invention, polymerizable monofunctional compounds or polymerizable monofunctional compounds to which polymerizable polyfunctional compounds are added can be given. As examples of monofunctional compounds, vinyl group-containing lactams such as N-vinylpyrrolidone and N-vinylcaprolactam, (meth)acrylates having an alicyclic structure such as isobornyl (meth)acrylate, bornyl (meth)acrylate, tricyclodecanyl (meth)acrylate, and dicyclopentanyl (meth)acrylate, benzyl (meth)acrylate, 4-butylcyclohexyl (meth)acrylate, acryloylmorpholine, vinylimidazole, vinylpyridine, and the like can be given. Further examples include 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, and the like.

Of these monofunctional compounds, vinyl group-containing lactams such as N-vinylpyrrolidone and N-vinylcaprolactam, monofunctional (meth)acrylate containing an aliphatic hydrocarbon group having 10 or more carbon atoms are preferable. The aliphatic group having 10 or more carbon atoms may be linear, branched, or alicyclic. The number of carbon atoms is preferably 10-24. Of these, isobornyl (meth)acrylate, isodecyl (meth)acrylate, and lauryl (meth)acrylate are still more preferable. Particularly preferable compounds are isobornyl (meth)acrylate and/or isodecyl (meth)acrylate. As examples of commercially available products of these monofunctional compounds, IBXA (manufactured by Osaka Organic Chemical Industry Co., Ltd.), Aronix M-111, M-113, M-114, M-117, and TO-1210 (manufactured by Toagosei Co., Ltd.) can be given.

There are no specific limitations to polyfunctional compounds insofar as the compounds can be used in a resin composition for optical fibers. Preferable examples include polyethylene glycol diacrylate, tricyclodecanediyldimethylene di(meth)acrylate, di(meth)acrylate of ethylene oxide addition bisphenol A, and tris(2-hydroxyethyl)isocyanurate tri(meth)acrylate. As examples of commercially available products of these polyfunctional compounds, Light acrylate 9EG-A, 4EG-A (manufactured by Kyoeisha Chemical Co., Ltd.), Yupimer UV, SA1002 (manufactured by Mitsubishi Chemical Corp.), and Aronix M-215, M-315, M-325 (manufactured by Toagosei Co., Ltd.) can be given.

The content of the reactive diluent in the curable resin composition of the present invention is preferably 1-50 wt%, and still more preferably 2-45 wt%. If the content is less than 1 wt%, curability may be impaired. If the content exceeds 50 wt%, application may become uneven due to low viscosity, thereby resulting in unstable application.

As examples of the polymerization initiator (3) used in the present invention, a heat polymerization initiator and a photopolymerization initiator can be given. As examples of heat polymerization initiator, peroxides, azo compounds, and like can be given. Specific examples include benzoyl peroxide, t-butyl oxybenzoate, azobisisobutyronitrile, and the like.

In the case of curing the curable resin composition of the present invention using light, a photosensitizer may be added as required in addition to the photopolymerization initiator. As examples of the photopolymerization initiator, 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide, bis-(2,6-dimethoxybenzoyl)-2,4,4-trimethylpentylphosphine oxide, and the like can be given. As examples of commercially available products of the photopolymerization initiator, Irgacure 184, 369, 651, 500, 907, CGI1700, CGI1750, CGI1850, CG24-61, Darocur 1116, 1173 (manufactured by Ciba Specialty Chemicals Co., Ltd.), Lucirin TPO (manufactured by BASF), Ubecryl P36 (manufactured by UCB), and the like can be given. As examples of the photosensitizer, triethylamine, diethylamine, N-methyldiethanoleamine, ethanolamine, 4-dimethyl aminobenzoic acid, methyl 4-dimethylaminobenzoate, ethyl 4-dimethylaminobenzoate, isoamyl 4-dimethylaminobenzoate, and the like can be given. As examples of commercially available products of the photosensitizer, Ubecryl P102, 103, 104, 105 (manufactured by UCB), and the like can be given.

The content of the polymerization initiator (3) in the curable resin composition of the present invention is preferably 0.3-8 wt%, and particularly preferably 0.5-5 wt%.

Additives such as coloring agents, light stabilizers, silane coupling agents, heat polymerization inhibitors, leveling agents, surfactants, preservatives, plasticizers, lubricants, solvents, fillers, aging preventives, wettability improvers, and coating surface improvers may be added to the curable resin composition in addition to the above components. As examples of light stabilizers, Tinuvin 292, 144, 622LD (manufactured by Ciba Specialty Chemicals Co., Ltd.), Sanol LS770 (manufactured by Sankyo Co., Ltd.), TM-061 (manufactured by Sumitomo Chemical Industries Co., Ltd.), and the like can be given. As examples of silane coupling agents, γ-aminopropyltriethoxysilane, γ-mercaptopropyltrimethoxysilane, γ-methacryloxypropyltrimethoxysilane, commercially available products such as SH6062, 6030 (manufactured by Toray-Dow Corning Silicone Co., Ltd.), KBE903, 603, 403 (manufactured by Shin-Etsu Chemical Co., Ltd.), and the like can be given.

The curable resin composition of the present invention is cured using heat and/or radiation. Radiation used herein includes infrared rays, visible rays, ultraviolet rays, X-rays, electron beams, α-rays, β-rays,γ-rays, and the like. Of these, ultraviolet rays are particularly preferable.

A jelly resistance evaluation method of the present invention is described below.

A cured product used in the jelly resistance evaluation method of the present invention is a cured product of a sample curable resin composition for coating optical fibers. The thickness of the cured product is 200 $\mu$m, which is close to the thickness when applied to optical fibers in practice. The length and the width of the cured product film are 25 mm and 6 mm, respectively.

In this evaluation method, mineral oil (class 1, No. 1) described in JIS C2320 is used as a standard substance for a jelly. More specifically, mineral oil manufactured by Aldrich or mineral oil manufactured by Wako Pure Chemicals Co., Ltd. can be used.

The jelly resistance of the cured product is evaluated by measuring the dimensional change of the cured product after immersion in mineral oil at 25°C for one week. The rate of dimensional change is determined by measuring the dimensions of the cured product in the longitudinal direction and using the following equation.

$$\text{Rate of dimensional change (\%)} = (\text{dimension after immersion - dimension before immersion})/\text{dimension before immersion} \times 100$$

The rate of dimensional change of the cured product after immersion in mineral oil at 25°C for one week is 2.5% or less, preferably 2.3% or less, and particularly preferably 2.0% or less. If the rate of dimensional change exceeds 2.5%, the jelly resistance of the cured product may decrease, whereby separation between the glass and the primary layer in the optical fiber occurs.

Examples

The present invention is described below in more detail by examples, which are not intended to be limiting of the present invention. "Parts" and "%" respectively mean "parts by weight" and "wt%" unless otherwise indicated.

Synthesis Example 1

(synthesis example of polymerizable oligomer (a))

A reaction vessel equipped with a stirrer was charged with 831.0 g of polypropylene glycol with a number average molecular weight of 2000, 129.3 g of isophorone diisocyanate, 0.24 g of 2,6-di-t-butyl-p-cresol, and 0.08 g of phenothiazine. The mixture was cooled to 15°C while stirring. After the addition of 0.8 g of dibutyltin dilaurate, the mixture was slowly heated to 35°C for one hour while stirring. The mixture was then allowed to react at 50°C. When the residual isocyanate concentration decreased to 1.26 wt% or less (ratio to raw material, hereinafter the same), 38.6 g of 2-hydroxyethyl acrylate was added. The mixture was allowed to react at about 60°C while stirring. The reaction was terminated when the residual isocyanate concentration was 0.1 wt% or less to obtain a polymerizable oligomer (hereinafter called "polymerizable oligomer (a)").

Synthesis Example 2

(synthesis example of polymerizable oligomer (b))

A reaction vessel equipped with a stirrer was charged with 907.2 g of polypropylene glycol with a number average molecular weight of 4000, 70.6 g of isophorone diisocyanate, 0.24 g of 2,6-di-t-butyl-p-cresol, and 0.08 g of phenothiazine. The mixture was cooled to 15°C while stirring. After the addition of 0.8 g of dibutyltin dilaurate, the mixture was slowly heated to 35°C for one hour while stirring. Then, the mixture was allowed to react at 50°C. When the residual isocyanate concentration decreased to 0.6 wt% or less (ratio to raw material, hereinafter the same), 21.1 g of 2-hydroxyethyl acrylate was added. The mixture was allowed to react at about 60°C while stirring. The reaction was terminated when the residual isocyanate concentration was 0.1 wt% or less to obtain a polymerizable oligomer (hereinafter called "polymerizable oligomer (b)").

Synthesis Example 3

(synthesis example of polymerizable oligomer (c))

A reaction vessel equipped with a stirrer was charged with 950.9 g of polypropylene glycol with a number average molecular weight of 8000, 37.0 g of isophorone diisocyanate, 0.24 g of 2,6-di-t-butyl-p-cresol, and 0.08 g of phenothiazine. The mixture was cooled to 15°C while stirring. After the addition of 0.8 g of dibutyltin dilaurate, the mixture was slowly heated to 35°C for one hour while stirring. The mixture was then allowed to react at 50°C. When the residual isocyanate concentration decreased to 0.4 wt% or less (ratio to raw material, hereinafter the same), 11.0 g of 2-hydroxyethyl acrylate was added. The mixture was allowed to react at about 60°C while stirring. The reaction was terminated when the residual isocyanate concentration was 0.1 wt% or less to obtain a polymerizable oligomer (hereinafter called "polymerizable oligomer (c)").

Synthesis Example 4

(synthesis example of polymerizable oligomer (d))

A reaction vessel equipped with a stirrer was charged with 96.4 g of isophorone diisocyanate, 0.024 g of 2,6-di-t-butyl-p-cresol, 0.08 g of phenothiazine, and 0.8 g of dibutyltin dilaurate. The mixture was cooled to 15°C while stirring. 86.9 g of 2-hydroxyethyl acrylate was added using a dropping funnel for one hour. The mixture was slowly heated to 35°C for one hour while stirring. After the addition of 815.6g of a copolymer of tetrahydrofuran and 2-methyltetrahydrofuran with a number average molecular weight of 2000 ("PTGL2000" manufactured by Hodogaya Chemical Co., Ltd.), the mixture was allowed to react at 60°C. The reaction was terminated when the residual isocyanate concentration was 0.1 wt% or less to obtain a polymerizable oligomer (hereinafter called "polymerizable oligomer (d)").

Examples 1-5 and Comparative Examples 1-3

A reaction vessel equipped with a stirrer was charged with compounds according to the composition (weight ratio) shown in Table 1. The mixture was stirred at 50°C to obtain compositions of Examples and Comparative Examples.

Reference Example 1

A synthesis example of a composition for secondary layer is described below.

A reaction vessel equipped with a stirrer was charged with 134.8 parts of 2,4-toluenediisocyanate, 0.8 part of dibutyltin dilaurate, and 0.32 part of 2,6-dit-butyl-p-cresol. The mixture was cooled to 15°C or less. 89.9 parts of 2-hydroxyethyl acrylate was added dropwise at 30°C or less while stirring. After the addition, the mixture was allowed to react at 30°C for one hour. After the addition of 774.0 parts of a ring-opening polymer of tetrahydrofuran with a number average molecular weight of 2,000, the mixture was stirred at 20-55°C. The reaction was terminated when the residual isocyanate was 0.1 wt% or less. This liquid resin is called "U-1".

Then, a reaction vessel equipped with a stirrer was charged with 230.6 parts of IBXA (manufactured by Osaka Organic Chemical Industry Co., Ltd.), 273.0 parts of 2,4-toluenediisocyanate, 0.6 part of dibutyltin dilaurate, and 0.24 part of 2,6-di-t-butyl-p-cresol. The mixture was cooled to 15°C or less. 182.0 parts of 2-hydroxyethyl acrylate was added dropwise at 30°C or less while stirring. After the addition, the mixture was allowed to react at 30°C for one hour. After the addition of 313.5 parts of Uniol DA400 (manufactured by Nippon Oil and Fats Co., Ltd.), the mixture was stirred at 20-55°C. The reaction was terminated when the residual isocyanate was 0.1 wt% or less. This liquid resin is called "U-2".

A reaction vessel equipped with a stirrer was charged with 499.7 parts of IBXA (manufactured by Osaka Organic Chemical Industry Co., Ltd.), 214.2 parts of 2,4-toluenediisocyanate, 0.4 part of dibutyltin dilaurate, and 0.16 part of 2,6-dit-butyl-p-cresol. The mixture was cooled to 15°C or less. 285.6 parts of 2-hydroxyethyl acrylate was added dropwise at 30°C or less while stirring. After the addition, the mixture was allowed to react at 30°C for one hour. The mixture was then stirred at 20-55°C. The reaction was terminated when the residual isocyanate was 0.1 wt% or less. This liquid resin is called "U-3".

A reaction vessel equipped with a stirrer was charged with 32.48 parts of U-1, 28.15 parts of U-2, 9.84 parts of U-3, 7.87 parts of N-vinylpyrrolidone, 7.87 parts of tricyclodecanediyldimethylene diacrylates, 10.83 parts of diacrylate of diol of ethylene oxide addition product of bisphenol A, and 0.3 parts of Irganox 1035 (manufactured by Ciba Specialty Chemicals Co., Ltd.). The mixture was stirred at 50-60°C until a homogeneous transparent liquid was obtained, to produce urethane acrylate. This liquid resin is called A-1. This liquid resin was applied to a glass plate using an applicator for a thickness of 381 $\mu$m and irradiated with ultraviolet rays at a dose of 0.5 J/cm$^2$ in a nitrogen atmosphere using a 3.5 kW metal halide lamp ("SMX-3500/F-OS" manufactured by ORC Co., Ltd.) to obtain a cured film with a thickness of about 200 $\mu$m. The Young's modulus of this cured film measured in a tensile test was 800 MPa/mm$^2$.

Viscosity measurement method of resin composition

Viscosity of the resin composition was measured according to JIS K7117. Viscosity was measured using a DA viscometer and a DA No. 4 spindle at a spindle rotation rate of 50 rpm.

Measurement method of Young's modulus of cured product

The liquid composition was applied to a glass plate using an applicator for a thickness of 381 $\mu$m. The liquid composition was irradiated with ultraviolet rays at a dose of 0.1 J/cm$^2$ in air using a 3.5 kW metal halide lamp ("SMX-3500/F-OS" manufactured by ORC Co., Ltd.) to obtain a cured film with a thickness of about 200 $\mu$m. The cured product was allowed to stand at a temperature of 23°C and a relative humidity of 50% for 12 hours or more to prepare a test specimen. The Young's modulus of the test specimen at 23°C was measured according to JIS K7113. Note that the Young's modulus was calculated from a tensile stress at a tensile rate of 1 mm/min and a strain of 2.5%.

Test Example 1 (Test method for mineral oil immersion dimensional change)

The cured products of the compositions obtained in Examples and Comparative Examples were evaluated according to mineral oil immersion dimensional change. The liquid composition was applied to a glass plate using an applicator for a thickness of 381 $\mu$m. The liquid composition was irradiated with ultraviolet rays at a dose of 0.1 J/cm$^2$ in air using a 3.5 kW metal halide lamp ("SMX-3500/F-OS" manufactured by ORC Co., Ltd.) to obtain a cured film with a thickness of about 200 $\mu$m. The cured film was cut into a sheet with a length of 25 mm and a width of 6 mm. The dimensions of the cured film in the longitudinal direction was measured before mineral oil immersion. The cured film was then immersed in mineral oil (manufactured by Aldrich) for one week. The immersion temperature was 25°C. The dimensions of the cured product in the longitudinal direction were measured to calculate the rate of dimensional change according to the above equation.

(Jelly resistance of optical fiber)

A quartz bar was heated to 2000°C and drawn at a drawing rate of 60 m/min using a optical fiber drawing machine to produce a quartz fiber with an outer diameter of 125 $\mu$m. The composition was applied to the quartz fiber as the primary layer immediately after production. The composition was cured by irradiation with ultraviolet rays from a ultraviolet lamp (output: 3 Kw). The composition obtained in Reference Example 2 was applied as the secondary layer and cured by irradiation with ultraviolet rays in the same manner as in the above.

An optical fiber (outer diameter of primary layer: 200 $\mu$m, outer diameter of secondary layer: 250 $\mu$m) was thus obtained. The optical fiber thus obtained was cut into a piece with a length of 1 m and immersed in a jelly buffer agent ("415DPL" manufactured by Syncofax). Note that the sections were not immersed in the buffer agent. The optical fiber was allowed to stand at 80°C for one month. The optical fiber was then removed from the buffer agent and observed using an optical microscope (magnification: 200) to determined the presence or absence of separation between the fiber and the primary layer.

[Table 1]

| Component | | Example | | | | | Comparative Example | | |
|---|---|---|---|---|---|---|---|---|---|
| | | 1 | 2 | 3 | 4 | 5 | 1 | 2 | 3 |
| Urethane acrylate | Polymerizable oligomer (a) | 61.8 | | 61.8 | | 59.0 | 82.0 | 40.0 | |
| | Polymerizable oligomer (b) | | 61.8 | | | | | | |
| | Polymerizable oligomer (c) | | | | 61.8 | | | | |
| | Polymerizable oligomer (d) | | | | | | | | 49.3 |
| Reactive diluent | N-vinylcaprolactam | 7.4 | 7.5 | 7.4 | 7.1 | 9.2 | 6.9 | 7.0 | 7.9 |
| | IBXA | 14.4 | 13.4 | | 18.3 | 9.9 | 4.9 | 35.5 | 19.8 |
| | Isodecyl acrylate | | | 14.4 | | | | | |
| | M113 | 14.0 | 13.9 | 14.0 | 10.7 | 20.0 | 3.7 | 15.0 | 17.9 |
| | 1,6-Hexanediol diacrylate | | 1.0 | | | | | | 2.0 |
| Polymerization initiator | LUCIRIN TPO | 1.3 | 1.3 | 1.3 | 1.0 | 0.8 | 1.3 | 1.3 | 2.0 |
| Photosensitizer | Diethylamine | 0.1 | 0.1 | 0.1 | 0.1 | 0.1 | 0.2 | 0.2 | 0.1 |
| Silane coupling agent | SH6062 | 1.0 | 1.0 | 1.0 | 1.0 | 1.0 | 1.0 | 1.0 | 1.0 |
| Viscosity of resin composition (Pa □ s) | | 4.0 | 4.5 | 3.5 | 5.0 | 3.5 | 10.0 | 2.5 | 3.5 |
| Young's modulus of cured product (MPa) | | 1.3 | 1.2 | 1.2 | 1.0 | 1.0 | 2.1 | 1.0 | 1.0 |
| Mineral oil immersion dimensional change (%) | | 1.5 | 2.2 | 2.1 | 2.4 | 2.3 | 2.0 | 2.8 | 2.9 |
| Jelly resistance of optical fiber (separation) | | None | None | None | None | None | Observed | Observed | Observed |

Lucirin TPO: 2,4,6-Trimethylbenzoyldiphenylphosphine oxide (manufactured by BASF) Lucirin TPO: 2,4,6-Trimethylbenzoyldiphenylphosphine oxide (manufactured by BASF) IBXA: Isobornyl acrylate (manufactured by Osaka Organic Chemical Industry Co., Ltd.) M113 : Nonylphenyl EO-modified acrylate (manufactured by Toagosei Co., Ltd.) SH6062: $\gamma$-mercaptotrimethoxysilane (manufactured by Toray-Dow Corning Silicone Co., Ltd.)

As is clear from Table 1, since the mineral oil immersion dimensional change evaluation method using a test specimen of the cured product of the present invention accurately reflects jelly resistance of optical fibers used in practice, the cured product of the curable resin composition of the present invention excels in jelly resistance.

**Claims**

1. A curable resin composition for coating optical fibers comprising:

(1) 50-70 wt% of a urethane (meth)acrylate obtained by reacting (A) a polyol compound, (B) a polyisocyanate compound, and (C) a (meth)acrylate compound containing a hydroxyl group; wherein the proportion of said polyol compound (A), said polyisocyanate compound (B) and said (meth)acrylate compound (C) is determined so that an isocyanate group included in (B) and a hydroxyl group included in (C) are respectively 1.1-2 equivalents and 0.1 -1 equivalent for one equivalent of a hydroxyl group included in (A);
(2) a reactive diluent copolymerizable with the component (1); and
(3) a polymerization initiator;

wherein the rate of dimensional change of the cured product of the composition after immersion in mineral oil at 25°C for one week is 2.5% or less and wherein the Young's modulus of the cured product is 0.1 - 2.0 MPa.

2. The curable resin composition for coating optical fibers according to claim 1, comprising a monofunctional (meth) acrylate containing an aliphatic hydrocarbon group having 10 or more carbon atoms as the component (2).

3. The curable resin composition for coating optical fibers according to claim 1 or claim 2, comprising 10-25 wt% of isobornyl (meth)acrylate and/or isodecyl (meth)acrylate as the component (2).

4. The curable resin composition for coating optical fibers according to any one of claims 1 to 3, wherein the polyol compound (A) of the component (1) is polypropylene glycol.

5. The curable resin composition for coating optical fibers according to claim 4, wherein the number average molecular weight of the polypropylene glycol is 1,000-7,000.

6. A coated optical glass fiber having as a first coating, a cured product of the curable resin composition for coating optical fibers according to any one of claims 1 to 5, and a cured secondary coating.

7. A coated optical glass fiber according to claim 6, wherein the coated optical fibers shows no defects like separations of the coating from the fiber, or foam (bubble) formation in the coating after immersion in a jelly buffer agent at 80°C for one month.

8. Ribbon, loose tube cable, or ribbon cable comprising at least one coated optical glass fiber according to claim 6 or 7.

**Patentansprüche**

1. Härtbare Harzzusammensetzung zum Beschichten von optischen Fasern, umfassend:

(1) 50 - 70 Gew.-% eines Urethan(meth)acrylats, erhalten durch die Umsetzung (A) einer Polyolverbindung, (B) einer Polyisocyanatverbindung und (C) einer (Meth)Acrylatverbindung, die eine Hydroxylgruppe enthält, wobei das Verhältnis der Polyolverbindung (A), der Polyisocyanatverbindung (B) und der (Meth)-Acrylatverbindung (C) so festgelegt ist, dass eine in (B) eingeschlossene Isocyanatgruppe und eine in (C) eingeschlossene Hydroxylgruppe jeweils 1,1 - 2 Äquivalente und 0,1 - 1 Äquivalent auf ein Äquivalent der in (A) eingeschlossenen Hydroxylgruppe betragen,
(2) ein reaktives Verdünnungsmittel, das mit der Komponente (1) copolymerisierbar ist, und
(3) einen Polymerisationsinitiator,

wobei die Rate der Maßänderung des gehärteten Produkts der Zusammensetzung nach einem einwöchigen Tauchen in Mineralöl bei 25 °C 2,5 % oder weniger beträgt und wobei der Youngsche Modul des gehärteten Produkts 0,1 - 2,0 MPa beträgt.

**2.** Härtbare Harzzusammensetzung zum Beschichten von optischen Fasern nach Anspruch 1, umfassend ein monofunktionelles (Meth)Acrylat, das eine aliphatische Kohlenwasserstoffgruppe mit 10 oder mehr Kohlenstoffatomen als Komponente (2) enthält.

**3.** Härtbare Harzzusammensetzung zum Beschichten von optischen Fasern nach Anspruch 1 oder Anspruch 2, umfassend 10 - 25 Gew.-% Isobornyl(meth)acrylat und/oder Isodecyl(meth)acrylat als Komponente (2).

**4.** Härtbare Harzzusammensetzung zum Beschichten von optischen Fasern nach einem der Ansprüche 1 bis 3, wobei die Polyolverbindung (A) von Komponente (1) Polypropylenglycol ist.

**5.** Härtbare Harzzusammensetzung zum Beschichten von optischen Fasern nach Anspruch 4, wobei das Zahlenmittel der Molmasse des Polypropylenglycols 1000 bis 7000 beträgt.

**6.** Beschichtete optische Glasfaser, die als eine erste Beschichtung ein gehärtetes Produkt der härtbaren Harzzusammensetzung zum Beschichten von optischen Fasern nach einem der Ansprüche 1 bis 5 und eine gehärtete Sekundärbeschichtung aufweist.

**7.** Beschichtete optische Glasfaser nach Anspruch 6, wobei die beschichteten optischen Fasern nach einem einen Monat lang bei 80 °C erfolgenden Tauchen in einem Gel-Puffermittel keine Defekte wie Trennungen der Beschichtung von der Faser oder eine Schaum- (Blasen-)bildung in der Beschichtung aufweisen.

**8.** Band, loses Rohrkabel oder Bandkabel, umfassend wenigstens eine beschichtete optische Glasfaser nach Anspruch 6 oder 7.

## Revendications

**1.** Composition de résine durcissable pour revêtir des fibres optiques comprenant :

(1) 50-70 % en masse d'un (méth)acrylate d'uréthane obtenu par réaction (A) d'un composé polyol, (B) d'un composé polyisocyanate, et (C) d'un composé (méth)acrylate contenant un groupe hydroxyle ; où la proportion dudit composé polyol (A), dudit composé polyisocyanate (8) et dudit composé (méth)acrylate (C) est déterminée de telle manière qu'un groupe isocyanate inclus dans (B) et un groupe hydroxyle inclus dans (C) sont respectivement 1,1-2 équivalents et 0,1-1 équivalent pour 1 équivalent d'un groupe hydroxyle inclus dans (A) ;
(2) un diluant réactif copolymérisable avec le composant (1) ; et
(3) un initiateur de polymérisation ;

où le taux de changement dimensionnel du produit durci de la composition après immersion dans l'huile minérale à 25°C pendant une semaine est 2,5 % ou moins et où le module d'Young du produit durci est 0,1-2,0 MPa.

**2.** Composition de résine durcissable pour revêtir des fibres optiques selon la revendication 1, comprenant un (méth)acrylate monofonctionnel contenant un groupe hydrocarboné aliphatique ayant 10 atomes de carbone ou plus comme composant (2).

**3.** Composition de résine durcissable pour revêtir des fibres optiques selon la revendication 1 ou la revendication 2, comprenant 10-25 % en masse de (méth)acrylate d'isobornyle et/ou de (méth)acrylate d'isodécyle comme composant (2).

**4.** Composition de résine durcissable pour revêtir des fibres optiques selon l'une quelconque des revendications 1 à 3, où le composé polyol (A) du composant (1) est le polypropylèneglycol.

**5.** Composition de résine durcissable pour revêtir des fibres optiques selon la revendication 4, où la masse moléculaire moyenne en nombre du polypropylèneglycol est 1 000-7000.

**6.** Fibre de verre optique revêtue ayant comme premier revêtement un produit durci de la composition de résine durcissable pour revêtir des fibres optiques selon l'une quelconque des revendications 1 à 5 et un revêtement secondaire durci.

7.  Fibre de verre optique revêtue selon la revendication 6, où la fibre optique revêtue ne présente pas de défaut comme des séparations du revêtement d'avec la fibre, ou la formation de mousse (bulles) dans le revêtement après immersion dans un agent tampon de type gelée à 80°C pendant 1 mois.

8.  Ruban, câble-tube lâche ou câble-ruban comprenant au moins une fibre de verre optique revêtue selon la revendication 6 ou 7.